# FASCICULE DE BREVET EUROPEEN

(11) **EP 0 537 065 B1**
(45) Date de publication et mention de la délivrance du brevet: **03.01.1996**
(21) Numéro de dépôt: 92402732.9
(22) Date de dépôt: 07.10.1992
(51) Int. Cl.: B60L 11/18

(54) **Boîtier de prise de charge pour véhicule à moteur électrique**
Steckergehäuse für ein Fahrzeug mit elektrischen Motoren
Connector housing for a vehicle with electric motors

(30) Priorité: 10.10.1991 FR 9112931
(43) Date de publication de la demande: 14.04.1993
(73) Titulaire: AUTOMOBILES PEUGEOT, F-75116 Paris (FR); AUTOMOBILES CITROEN, F-92200 Neuilly-sur-Seine (FR)
(72) Inventeur: Cornu, François, F-95240 Cormeilles-en-Parisis (FR)
(74) Mandataire: Fabien, Henri

(56) Documents cités:
- US-A- 3 270 267
- US-A- 4 008 423
- US-A- 4 920 475
- PATENT ABSTRACTS OF JAPAN vol. 10, no. 66 (M-461)(2123) 15 Mars 1986& JP-A-60 210 102

## Description

Certains véhicules automobiles comportent un moteur électrique d'entraînement qui est alimenté à partir d'une batterie embarquée. Cette batterie doit être rechargée périodiquement et le véhicule est muni à cet effet d'une prise de charge logée dans un boîtier porté par le châssis du véhicule.

Un châssis de véhicule peut comporter diverses carrosseries de volumes et de longueurs différentes, par exemple du type berline, break, cabriolet ou pick-up.

La présente invention a pour objet un véhicule à moteur électrique qui est perfectionné de manière à éviter toute remise en cause du câblage de la prise et de l'accessibilité de cette prise, à chaque échange de carrosserie.

Ce véhicule est caractérisé en ce que le boîtier de la prise de charge est monté coulissant longitudinalement par rapport au châssis. On peut ainsi adapter la position du boîtier à la longueur de la carrosserie à monter sur ce châssis.

Dans un mode de réalisation avantageux de l'invention, le boîtier de la prise de charge est fermé par la plaque minéralogique arrière.

On a décrit ci-après, à titre d'exemple non limitatif, un mode de réalisation du véhicule selon l'invention, avec référence aux dessins annexés dans lesquels :
La Figure 1 est une vue en élévation schématique du véhicule muni d'une carrosserie courte;
La Figure 2 est une vue semblable à la Figure 1, le véhicule étant muni d'une carrosserie longue;
La Figure 3 est une vue à plus grande échelle montrant la position du boîtier dans le cas d'une carrosserie courte;
La Figure 4 est une coupe suivant IV-IV de la Figure 3;
La Figure 5 est une vue semblable à la Figure 3, dans le cas d'une carrosserie longue.

Au dessin, on voit une prise de charge 1 qui est fixée dans un boîtier 2 mobile sur le châssis 3 d'un véhicule automobile; ce boîtier comporte des ailes inférieures repliées 2a maintenues par des coulisses 4 parallèles à l'axe longitudinal du véhicule. Des moyens non représentés aux dessins et constitués par exemple par un dispositif à vis, à clavette ou à goupille permettent d'immobiliser le boîtier 2. Celui-ci peut être fermé par la plaque minéralogique arrière 5 qui est reliée par une charnière 6 au bord transversal inférieur du boîtier 2. La prise 1 est reliée par un câble 7 à la batterie du véhicule. Ce câble peut être lové dans un espace 8 ménagé dans le châssis 3.

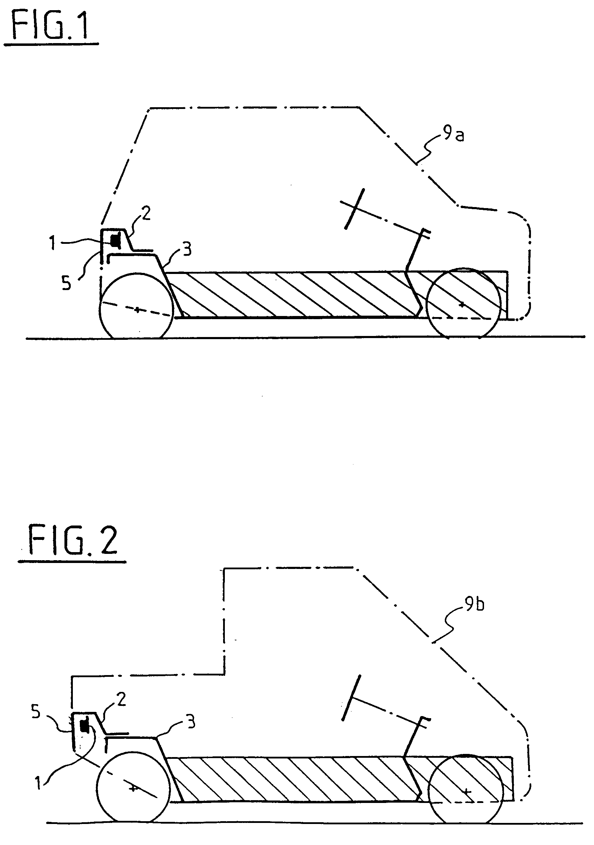

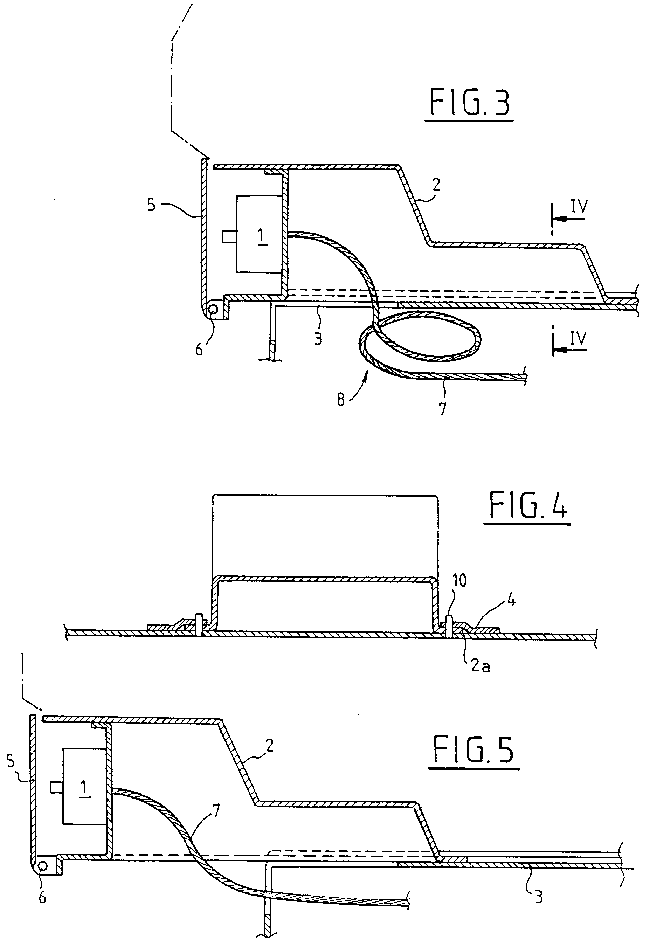

Aux Figures 1 et 3, la carrosserie 9a est relativement courte; le boîtier 2 est dans sa position la plus intérieure et le câble 7 est lové dans l'espace 8. Par contre, aux Figures 2 et 5, la carrosserie 9b est relativement longue; le boîtier 2 est dans sa position la plus extérieure et le câble 7 déplié. Dans l'un et l'autre cas, le boîtier 2 peut être verrouillé en translation par une goupille amovible 10.

Il va de soi que la présente invention ne.doit pas être considérée comme limitée au mode de réalisation décrit et représenté mais en couvre, au contraire, toutes les variantes.

## Revendications

1. Véhicule comportant un moteur électrique d'entraînement et une prise de charge (1) logée dans un boîtier (2) porté par le châssis (3) du véhicule,
caractérisé en ce que le boîtier (2) de la prise de charge (1) est monté coulissant longitudinalement par rapport au châssis (3).

2. Véhicule selon la revendication 1,
caractérisé en ce que le boîtier (2) est fermé par la plaque d'immatriculation arrière (5) du véhicule.

3. Véhicule selon la revendication 1 ou 2,
caractérisé en ce que le boîtier (2) comporte des ailes inférieures (2a) maintenues par des coulisses (4) parallèles à l'axe longitudinal du véhicule.

4. Véhicule selon l'une des revendications 1 à 3,
caractérisé en ce que le châssis (3) comporte un espace (8) dans lequel peut être lové le câble d'alimentation (7) de la prise de charge (1).

## Claims

1. A vehicle comprising an electric drive motor and a charging socket (1) located in a housing (2) mounted on the vehicle chassis (3), characterised in that the housing (2) of the charging socket (1) is mounted so as to slide longitudinally relative to the chassis (3).

2. A vehicle according to Claim 1,
characterised in that the housing (2) is closed off by the rear number plate (5) of the vehicle.

3. A vehicle according to Claim 1 or 2,
characterised in that the housing (2) comprises lower wings (2a) held by slideways (4) parallel to the longitudinal axis of the vehicle.

4. A vehicle according to Claims 1 to 3,
characterised in that the chassis (3) comprises a space (8) inside which the mains cable (7) of the charging socket (1) can be coiled.

## Patentansprüche

1. Fahrzeug mit einem elektrischen Antriebsmotor und einem Ladeanschluß (1), der in einem Gehäuse (2) angeordnet ist, das vom Fahrgestell (3) des Fahrzeugs getragen ist, dadurch **gekennzeichnet**, daß das Gehäuse (2) des Ladeanschlusses (1) in Längsrichtung in bezug auf das Fahrgestell (3) verschieblich angebracht ist.

2. Fahrzeug nach Anspruch 1, dadurch **gekennzeichnet**, daß das Gehäuse (2) durch das hintere Nummernschild (5) des Fahrzeugs verschlossen ist.

3. Fahrzeug nach Anspruch 1 oder 2, dadurch **gekennzeichnet**, daß das Gehäuse (2) untere Flügel (2a) aufweist, die durch Gleitführungen (4) gehalten sind, die sich parallel zur Längsachse des Fahrzeugs erstrecken.

4. Fahrzeug nach einem der Ansprüche 1 bis 3, dadurch **gekennzeichnet**, daß das Fahrgestell (3) einen Raum (8) aufweist, in dem das Speisekabel (7) des Ladeanschlusses (1) aufgewickelt sein kann.
